# EUROPÄISCHE PATENTANMELDUNG

(11) **EP 4 227 901 A1**
(43) Veröffentlichungstag der Anmeldung: **16.08.2023**
(21) Anmeldenummer: 22156143.4
(22) Anmeldetag: 10.02.2022
(51) Int. Cl.: G06T 7/246, G08G 1/052, G06K 9/62, G06V 10/75

(54) **VERFAHREN UND SYSTEM ZUR KAMERABASIERTEN BESTIMMUNG DER GESCHWINDIGKEIT EINES FAHRZEUGES IM STRASSENVERKEHR**

(71) Anmelder: Roadia GmbH, 13465 Berlin (DE)
(72) Erfinder: Fischer, Tobias, 13465 Berlin (DE); Filipenko, Mykhaylo, 13465 Berlin (DE); Hantschmann, Markus, 13465 Berlin (DE)
(74) Vertreter: dompatent von Kreisler Selting Werner - Partnerschaft von Patent- und Rechtsanwälten mbB

(57) **Zusammenfassung**

Das Verfahren (10) zur kamerabasierten Bestimmung der Geschwindigkeit eines Fahrzeuges (60) weist die nachfolgenden Verfahrensschritte auf:
- Erstellung einer ersten, zweiten, dritten und vierten Bildaufnahme;
- Erkennung von Merkmalen (61) in den einzelnen Bildaufnahmen;
- Prüfen der Konsistenz der einzelnen Merkmale (61);
- Verwerfen der inkonsistenten Merkmale (61);
- Bestimmung der räumlichen Position der Merkmale (61) unter Verwendung eines Triangulationsverfahrens;
- Bestimmung eines Geschwindigkeitsvektors für jedes Merkmal (61);
- Bestimmung der Geschwindigkeit für jedes Merkmal (61) aus dem für das entsprechende Merkmal (61) bestimmten Geschwindigkeitsvektor und der Differenz aus dem ersten Zeitpunkt und dem zweiten Zeitpunkt; und
- Bestimmung einer mittleren Geschwindigkeit des Fahrzeuges (60) durch Mittelung der bestimmten Geschwindigkeiten für jedes Merkmal (61).

## Beschreibung

Die vorliegende Erfindung betrifft ein Verfahren zur kamerabasierten Bestimmung der Geschwindigkeit eines Fahrzeuges im Straßenverkehr sowie ein entsprechendes System für die kamerabasierte Geschwindigkeitsbestimmung.

Zahlreiche Verfahren zur Geschwindigkeitsbestimmung sind aus dem Stand der Technik bekannt und tragen dazu bei, den Straßenverkehr zu überwachen und die Verkehrssicherheit zu erhöhen.

In den vergangenen zehn Jahren hat sich die Anzahl der Unfälle mit Personenschaden, die auf eine Überschreitung der örtlich zugelassenen Höchstgeschwindigkeit zurückgeführt werden können, um ca. 20 % reduziert. Dennoch wird die unzulässige Geschwindigkeitsüberschreitung weiterhin als Ursache für jeden dritten Verkehrstoten in Deutschland angesehen. Die Überwachung der Fahrzeuggeschwindigkeiten im Straßenverkehr leistet daher einen wichtigen Beitrag dazu, die Zahl der Verkehrsunfälle sowie der Verkehrstoten zu reduzieren, indem der Einsatz der genannten Verfahren dazu beiträgt, das Bewusstsein der Fahrer für das Einhalten der zulässigen Höchstgeschwindigkeit zu schärfen.

Bislang existieren diverse technische Lösungen, um die Geschwindigkeit von Fahrzeugen im Straßenverkehr zu messen. Die bisher bekannten Verfahren lassen sich in aktive und passive Verfahren einteilen.

Zu den aktiven Verfahren werden typischerweise diejenigen Verfahren gezählt, bei denen die Messvorrichtung elektromagnetische Strahlung im nah am optischen optischen Bereich (THz, Laser und Lidar) oder im Radiobereich (GHz, Radar und Mikrowellen) emittiert. Die anschließende Messung der Reflexion der durch die Messvorrichtung emittierten Strahlung erlaubt die Bestimmung der Geschwindigkeit eines Fahrzeuges. Dabei kann durch den Doppler-Effekt (Phasenverschiebung eines einzelnen Impulses) oder die Änderung der Signallaufzeit mehrerer aufeinander folgender Impulse auf die Fahrzeuggeschwindigkeit geschlossen werden. Darüber hinaus gibt es beispielsweise noch laserbasierte Verfahren, welche durch die Auswertung geometrischer Beziehungen auf die Fahrzeuggeschwindigkeit schließen lassen.

Die vorstehend diskutierten aktiven Messverfahren können durchaus präzise Ergebnisse liefern. Dennoch haben die aktiven Messverfahren den Nachteil, dass diese in der Regel einen hohen Energiebedarf aufweisen, der sich durch die erforderliche Emission der Strahlung ergibt. Folglich ist es häufig schwierig, Messvorrichtungen zur aktiven Geschwindigkeitsmessung mit Batterien, Akkumulatoren und/oder Solarzellen zu versorgen. Darüber hinaus sind Messsysteme für die aktive Messung von Fahrzeuggeschwindigkeiten meist mit hohen Anschaffungskosten verbunden.

Neben den genannten aktiven Messverfahren werden auch passive Messverfahren zur Geschwindigkeitsmessung eingesetzt. Anders als bei den aktiven Messverfahren wird bei den passiven Verfahren keine Strahlung emittiert. Hingegen wird bei den passiven Verfahren die Zeit gemessen, welche ein Fahrzeug benötigt, um eine bekannte Wegstrecke zurückzulegen. Derartige Verfahren werden auch als Weg-Zeit-Verfahren bezeichnet. Als Sensoren können dabei Lichtschranken, Helligkeitssensoren, Drucksensoren (auch bekannt als Überfahrsensoren) oder Induktionssensoren verwendet werden, die beim Passieren eines Fahrzeugs ein Signal erzeugen. Einige der genannten Verfahren erfordern bauliche Maßnahmen, wodurch die anfallenden Kosten stark zunehmen.

Ein Nachteil der beschriebenen Verfahren ist darin zu sehen, dass bei sämtlichen der genannten Verfahren eine separate Kamera zur Aufnahme der Fahrzeugdaten erforderlich ist.

Aufgrund der obigen Nachteile ist es Aufgabe der vorliegenden Erfindung, ein einfaches, kostengünstiges und präzises Verfahren zur Bestimmung der Geschwindigkeit eines Fahrzeuges im Straßenverkehr bereitzustellen.

Zur Lösung der genannten Aufgabe wird mit der vorliegenden Erfindung ein Verfahren zur kamerabasierten Bestimmung der Geschwindigkeit eines Fahrzeuges im Straßenverkehr vorgeschlagen, wobei das Verfahren die nachfolgenden Verfahrensschritte aufweist:
- Erstellung einer ersten Bildaufnahme zu einem ersten Zeitpunkt unter Verwendung eines ersten Bildsensors und Erstellung einer zweiten Bildaufnahme zu dem ersten Zeitpunkt unter Verwendung eines zweiten Bildsensors;
- Erstellung einer dritten Bildaufnahme zu einem zweiten Zeitpunkt unter Verwendung des ersten Bildsensors und Erstellung einer vierten Bildaufnahme zu dem zweiten Zeitpunkt unter Verwendung des zweiten Bildsensors;
- Erkennung von Merkmalen in den einzelnen Bildaufnahmen;
- Abgleich der Merkmale in den durch den ersten Bildsensor aufgenommenen Bildaufnahmen mit den in den durch den zweiten Bildsensor zum jeweils gleichen Zeitpunkt aufgenommen Bildaufnahmen enthaltenen Merkmale, wobei diejenigen Merkmale, die lediglich in den durch den ersten Bildsensor aufgenommen Bildaufnahmen oder in den durch den zweiten Bildsensor aufgenommenen Bildaufnahmen enthalten sind, verworfen werden;
- Vergleich der miteinander korrespondierenden Merkmale in den durch den ersten Bildsensor aufgenommenen Bildaufnahmen mit den Merkmalen in den durch den zweiten Bildsensor aufgenommenen Bildaufnahmen hinsichtlich ihrer Epipolargeometrie, wobei diejenigen Merkmale, für die die Epipolarbedingungen nicht erfüllt ist, verworfen werden;
- Abgleich der Merkmale in den durch den ersten Bildsensor aufgenommenen Bildaufnahmen, wobei diejenigen Merkmale, die nicht in beiden durch den ersten Bildsensor aufgenommenen Bildaufnahmen enthalten sind und diejenigen Merkmale, die nicht in beiden durch den zweiten Bildsensor aufgenommenen Bildaufnahmen enthalten sind, verworfen werden;
- Bestimmung von Merkmalen, deren Position von dem ersten Zeitpunkt zu dem zweiten Zeitpunkt unverändert geblieben sind und Entfernung derjenigen Merkmale, deren Position unverändert geblieben ist;
- Bestimmung der räumlichen Position der Merkmale unter Verwendung eines Triangulationsverfahrens;
- Bestimmung eines Geschwindigkeitsvektors für jedes Merkmal, das nicht zuvor verworfen wurde;
- Bestimmung der Geschwindigkeit für jedes Merkmal aus dem für das entsprechende Merkmal bestimmte Geschwindigkeitsvektor und der Differenz aus dem ersten Zeitpunkt und dem zweiten Zeitpunkt;
- Bestimmung einer mittleren Geschwindigkeit des Fahrzeuges durch Mittelung der bestimmten Geschwindigkeiten für jedes Merkmal.

Der Vorteil der kamerabasierten Geschwindigkeitsmessung liegt darin, dass keine oder kaum bauliche Maßnahmen erforderlich sind und dass das Verfahren in kostengünstiger Weise implementiert werden kann. Durch den Einsatz zweier Bildsensoren, deren Sensorfläche insbesondere zueinander geneigt ausgerichtet ist, wird es ermöglicht, die Position eines Fahrzeuges bzw. einzelner erkannter Merkmale dreidimensional zu ermitteln und dadurch die Geschwindigkeit des Fahrzeuges dreidimensional zu erfassen. Die beiden Bildsensoren können beispielsweise nebeneinander (im Sinne eines linken und eines rechten Bildsensors) oder übereinander (im Sinne eines oberen und eines unteren Bildsensors) angeordnet sein.

Die beiden Bildsensoren erstellen zu einem ersten Zeitpunkt und einem zweiten Zeitpunkt jeweils eine Bildaufnahme. Die Erfindung ist jedoch nicht auf die Bildaufnahme zu zwei Zeitpunkten beschränkt. Vielmehr können die Bildsensoren auch dazu ausgelegt sein, zahlreiche Bildaufnahmen zu erstellen, sodass die Informationen einer Vielzahl von Bildaufnahmen für die Geschwindigkeitsermittlung verwendet werden kann. Insofern sind die genannten zwei Zeitpunkte im Rahmen der vorliegenden Erfindung als Mindestmaß zu verstehen, sodass die einzelnen Bildsensoren mindestens zwei Bildaufnahmen erzeugen.

Der erste Bildsensor und der zweite Bildsensor können gemeinsam ein Kamerasystem darstellen. Die Bildsensoren können dabei in einem Gehäuse angeordnet sein. Zudem kann das Kamerasystem Aufnahmeoptiken aufweisen, die jeweils zwischen einem Bildsensor und dem zu überwachenden Aufnahmebereich (in welchem die Fahrzeuge aufgenommen werden sollen) angeordnet sind.

In jedem der durch die Bildsensoren generierten Bildaufnahmen werden spezifische Merkmale erkannt. Dabei kann auf eines von zahlreichen aus dem Stand der Technik bekannten Merkmalserkennungsverfahren (im Englischen auch als feature recognition algorithms) zurückgegriffen werden. Für die Erkennung der Merkmale können beispielsweise das SIFT- (Scale Invariant Feature Transform), SURF- (Speed Up Robust Feature), BRIEF- (Binary Robust Independent Elementary Feature) oder das ORB- (Oriented FAST and Rotated BRIEF) Verfahren eingesetzt werden. Auch kann für die Merkmalserkennung ein Harris Corner Detector eingesetzt werden, um markante Eckpunkte innerhalb einer Bildaufnahme zu detektieren.

Bei den Merkmalen kann es sich um einen markanten Punkt innerhalb der Bildaufnahme handeln. Beispielsweise kann ein Eckpunkt innerhalb einer Bildaufnahme, der einen besonders hohen Kontrast aufweist, detektiert werden. Alternativ hierzu kann sich das Merkmal auch auf eine Linie oder auf eine andere geometrische Form (beispielsweise ein Rechteck oder ein Trapez) beziehen. In der Praxis können mehrere zehn, mehrere 100, mehrere 1.000 oder auch noch mehr Merkmale innerhalb einer Bildaufnahme erkannt werden bzw. zu demselben Fahrzeug gehören. Da die Verarbeitung von einer hohen Anzahl an Merkmalen einerseits den Rechenaufwand und folglich die benötigte Rechenzeit erhöht und andererseits aufgrund zu erwartender Fehler bei der Erkennung einzelner Merkmale in den Bildaufnahmen die Ungenauigkeit reduziert, wird im Rahmen der vorliegenden Erfindung eine spezifische Selektion der ermittelten Merkmale vorgenommen, bevor letztendlich die Geschwindigkeit des Fahrzeuges auf Grundlage der ermittelten Merkmale bestimmt wird. Auf diese Weise wird einerseits die Effizienz des Messverfahrens signifikant erhöht und andererseits die Fehleranfälligkeit des Verfahrens reduziert.

Bei der Selektion werden einerseits die Merkmale, die durch den ersten Bildsensor aufgenommen wurden mit den Merkmalen, die durch den zweiten Bildsensor aufgenommen wurden, abgeglichen. Wurde ein Merkmal, beispielweise ein markanter Punkt zu einem ersten Zeitpunkt t1 in der ersten Bildaufnahme erkannt und taucht dieses Merkmal nicht in der zweiten Bildaufnahme (ebenfalls zum Zeitpunkt t1 aufgenommen) auf, so wird dieses Merkmal für die weitere Verarbeitung verworfen. Nach diesem Verfahrensschritt verbleiben also nur noch diejenigen Merkmale, die tatsächlich in den Bildaufnahmen enthalten sind, die durch beide Bildsensoren zum selben Zeitpunkt aufgenommen wurden. Auf diese Weise erfolgt eine erste Konsistenzprüfung, wobei sämtliche inkonsistente Merkmale für die Geschwindigkeitsberechnung unberücksichtigt bleiben.

Ein in einer Bildaufnahme bekanntes Merkmal kann beispielsweise durch einen Vektor beschrieben werden. Im Idealfall weisen zwei korrespondierende Merkmale in zwei Bildaufnahmen identische Werte auf. Folglich sind zwei Merkmale als identisch anzusehen, sofern die Merkmalsvektoren identisch sind. In der Praxis kann jedoch der Abgleich von zwei Merkmalen dahingehend erfolgen, dass nicht nur die Identität von zwei Merkmalsvektoren auf dasselbe Merkmal schließen lässt, sondern dass zunächst ein Abstand zwischen zwei Merkmalsvektoren berechnet wird und die Identität der zwei Merkmale dann angenommen wird, wenn der Abstand zwischen den Merkmalsvektoren geringer ist als ein vorgegebener Schwellwert. Zur Berechnung des Abstandes zwischen zwei Merkmalsvektoren kann beispielsweise der Hamming-Abstand oder der euklidische Abstand herangezogen werden.

Zusätzlich werden die Merkmale in den Bildaufnahmen, die durch den ersten Bildsensor und den zweiten Bildsensor zum gleichen Zeitpunkt erstellt wurden, hinsichtlich ihrer Epipolargeometrie miteinander verglichen. Sofern die Epipolarbedingung für zwei Merkmale erfüllt ist, wird davon ausgegangen, dass diese Punkte konsistent sind. In diesem Fall werden die Merkmale beibehalten. Ist die Epipolarbedingung für zwei Merkmale nicht erfüllt, so ist dies ein Indiz dafür, dass die Merkmale inkonsistent sind, wobei die inkonsistenten Merkmale entfernt und bei der späteren Geschwindigkeitsermittlung vernachlässigt werden. Im Allgemeinen ist die Epipolarbedingung für zwei Punkte dann erfüllt, wenn die nachfolgende Gleichung (auch als Epipolargleichung bezeichnet) erfüllt ist: 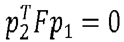 bzw.

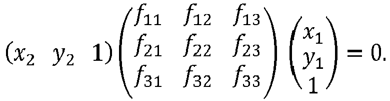

Dabei bezeichnet p₁ einen Punkt in der ersten Bildaufnahme, p₂ einen Punkt in der zweiten Bildaufnahme und F die Fundamentalmatrix. Die Fundamentalmatrix wird aus der geometrischen Beziehung der beiden Kameras zueinander (Translation und Rotation) und den intrinsischen Kameraparametern berechnet. Sie beschreibt eine Abbildungsvorschrift zwischen Koordinatensystemen beider Kameras. Sofern die Merkmale einzelne Punkte darstellen, kann durch Prüfung der obigen Bedingung unmittelbar festgestellt werden, ob die beiden Merkmale miteinander korrespondieren. Sofern die Merkmale geometrische Formen darstellen, kann beispielsweise jeweils ein Punkt oder mehrere Punkte der geometrischen Form der jeweiligen Bildaufnahmen miteinander hinsichtlich ihrer Epipolargeometrie verglichen werden. Beispielsweise kann im Falle einer Linie die Prüfung der Epipolarbedingung auf die beiden Endpunkte der Linie angewandt werden, um zu überprüfen, ob die in zwei Bildaufnahmen erkannten Linien dasselbe Merkmal beschreiben.

In der Praxis kann die Erfüllung der Epipolarbedingung derart definiert sein, dass das Produkt aus p₂ (transponiert), der Fundamentalmatrix F und p₁ nicht exakt gleich 0 ist, sondern kleiner ist als ein vorgegebener Grenzwert.

Ferner werden die Merkmale, die in zwei aufeinander folgenden Bildaufnahmen ermittelt wurden, welche durch einen Bildsensor aufgenommen wurden, auf Ihre Konsistenz überprüft. Dabei werden diejenigen Merkmale, die nicht in beiden Bildaufnahmen enthalten sind, die durch den ersten Bildsensor oder durch den zweiten Bildsensor aufgenommen wurden, verworfen. Wie bereits vorstehend ausgeführt, kann ein Bildsensor dazu ausgelegt sein, mehr als zwei Bildaufnahmen zu generieren. In diesem Fall kann es vorgesehen sein, dass diejenigen Merkmale verworfen werden, die nicht in sämtlichen Bildaufnahmen enthalten sind, welche durch einen Bildsensor generiert wurden.

Zur weiteren Erhöhung der Effizienz des erfindungsgemäßen Verfahrens werden bei der vorliegenden Erfindung zudem die Merkmale bestimmt, deren Positionen zeitlich betrachtet unverändert geblieben sind, wobei diese "konstanten" Merkmale verworfen werden. Dadurch wird die Gesamtanzahl der Merkmale, die für die Geschwindigkeitsbestimmung verwendet wird, weiter reduziert auf diejenigen Merkmale, die sich zwischen dem ersten und dem zweiten Zeitpunkt tatsächlich bewegen und die folglich Informationen über die Fahrzeuggeschwindigkeit enthalten. Dadurch kann in vorteilhafter Weise verhindert werden, dass unnötig Merkmale berücksichtigt werden, die beispielsweise einem Gebäude oder einer Straßenmarkierung zuzuordnen sind.

Nachdem diejenigen Merkmale verworfen wurden, die als inkonsistent anzusehen sind, erfolgt die Bestimmung der räumlichen Position der Merkmale unter Verwendung eines Triangulationsverfahrens. Triangulationsverfahren sind aus dem Stand der Technik bekannt und ermöglichen die Bestimmung der Position eines Objektes unter Ausnutzung trigonometrischer Beziehungen.

Sobald die Position eines Merkmals zum ersten Zeitpunkt und zum zweiten Zeitpunkt ermittelt ist, erfolgt die Bestimmung eines Geschwindigkeitsvektors für jedes Merkmal. Aus der zeitlichen Differenz zwischen zwei aufeinanderfolgenden Aufnahmen und dem Verschiebungsvektor (auch als Bewegungsvektor bezeichnet) für jedes (konsistente) Merkmal kann anschließend die Geschwindigkeit für jedes der (konsistenten) Merkmale ermittelt werden. Die zeitliche Differenz zwischen zwei Bildaufnahmen kann im Allgemeinen als bekannt vorausgesetzt werden. Diese kann beispielsweise aus der Bildaufnahmefrequenz der verwendeten Bildsensoren abgeleitet werden. Wenn die Bildsensoren mit einer Bildaufnahmefrequenz von 20 fps (frames per second) eingesetzt werden, so kann hieraus abgeleitet werden, dass die zeitliche Differenz bei zwei aufeinanderfolgenden Bildaufnahmen 50 ms beträgt. Werden aus einer Videosequenz zwei Bildaufnahmen für die Geschwindigkeitsermittlung verwendet, die zehn Einzelbilder auseinanderliegen, so kann daraus geschlossen werden, dass die zeitliche Differenz zwischen den verwendeten Bildaufnahmen 500 ms beträgt. Insofern kann ein Geschwindigkeitsvektor als Quotient aus einem Verschiebungsvektor, der die Bewegung eines Merkmals zwischen zwei Bildaufnahmen beschreibt und durch die Startposition und die Endposition des Merkmals definiert ist, und der zeitlichen Differenz zwischen den beiden Bildaufnahmen ermittelt werden.

Anschließend kann eine mittlere Geschwindigkeit des Fahrzeugs bestimmt werden, indem ein Mittelwert aus den einzelnen Geschwindigkeiten, die für jedes Merkmal ermittelt wurden, berechnet wird. Dabei kann beispielsweise aus den einzelnen Geschwindigkeitswerten ein arithmetischer Mittelwert gebildet werden oder der Medianwert aus den einzelnen Geschwindigkeitswerten ermittelt werden. Dabei werden lediglich die Merkmale bzw. die Geschwindigkeitswerte für diejenigen Merkmale berücksichtigt, die zuvor als konsistent angesehen und daher nicht verworfen wurden.

Auch wenn die vorliegende Erfindung vorstehend im Zusammenhang mit einer spezifischen Reihenfolge beschrieben wurde, ist es für den Fachmann jedoch selbstverständlich, dass die Reihenfolge der Verfahrensschritte nicht als zwingend anzusehen ist. Beispielsweise kann die Reihenfolge der einzelnen Konsistenzprüfungen betreffend die einzelnen Merkmale, vertauscht werden, ohne von der vorliegenden Erfindung abzuweichen.

Gemäß einer Ausführungsform der Erfindung kann vorgesehen sein, dass das Verfahren zusätzlich den nachfolgenden Verfahrensschritt aufweist:
- Überprüfung der Konsistenz der Geschwindigkeitsvektoren unter Verwendung eines RANSAC-Verfahrens, wobei diejenigen Geschwindigkeitsvektoren verworfen werden, die als inkonsistent bewertet wurden.

RANSAC-Verfahren (Random Sample Consensus Verfahren) sind im Allgemeinen aus dem Stand der Technik bekannt. Der Einsatz eines RANSAC-Verfahrens erlaubt es, Ausreißer in einem Messdatensatz zu erkennen. Dabei werden unter Berücksichtigung des Mittelwertes der aufgenommenen Messdaten und eines vorgegebenen Toleranzbereiches diejenigen Messwerte identifiziert, die sich außerhalb des vorgegebenen Toleranzbereiches befinden.

Gemäß einer Ausführungsform des erfindungsgemäßen Verfahrens kann vorgesehen sein, dass bei der Erstellung jeder Bildaufnahme eine Zeitsignatur generiert wird, welche der Bildaufnahme angehängt oder zugeordnet wird. Durch die zusätzliche Zeitsignatur kann die exakte Zeit, zu der eine Aufnahme tatsächlich erstellt wurde, präzise definiert werden. Auf diese Weise kann die Genauigkeit des erfindungsgemäßen Verfahrens erhöht werden.

Auch kann gemäß einer Ausführungsform des erfindungsgemäßen Verfahrens vorgesehen sein, dass das Verfahren den nachfolgenden Verfahrensschritt aufweist:
- Überprüfung der Konsistenz der Richtung der einzelnen Geschwindigkeitsvektoren, wobei jeweils der Winkel zwischen den einzelnen Geschwindigkeitsvektoren und einer vorgegebenen Bezugslinie ermittelt wird und aus den ermittelten Winkelwerten ein Winkelmittelwert bestimmt wird und diejenigen Geschwindigkeitsvektoren als inkonsistent angesehen werden, bei denen die Differenz zwischen dem ermittelten Winkel und dem Winkelmittelwert größer ist als ein vorgegebener Grenzwert, und wobei diejenigen Geschwindigkeitsvektoren verworfen werden, die als inkonsistent angesehen werden.

Dadurch können die einzelnen Geschwindigkeitsvektoren, die als inkonsistent anzusehen sind, verworfen werden. Durch die anschließende Limitierung auf die konsistenten Geschwindigkeitsvektoren für die anschließende Geschwindigkeitsberechnung kann die Genauigkeit des Verfahrens weiter erhöht werden. Gleichzeitig wird die Fehleranfälligkeit des Messverfahrens reduziert.

Ferner kann gemäß der vorliegenden Erfindung vorgesehen sein, dass das erfindungsgemäße Verfahren den nachfolgenden Verfahrensschritt aufweist:
- Überprüfung der Konsistenz des Betrages der einzelnen Geschwindigkeitsvektoren unter Verwendung eines RANSAC-Verfahrens, wobei diejenigen Geschwindigkeitsvektoren verworfen werden, die als inkonsistent angesehen werden.

Während bei dem zuvor beschriebenen Verfahrensschritt die Konsistenz der Richtung der Geschwindigkeitsvektoren überprüft wurde, wird bei diesem Verfahrensschritt die Konsistenz des Betrages überprüft. Dabei werden Ausreißer, die durch das eingesetzte RANSAC-Verfahren ermittelt wurden, bei der nachfolgenden Berechnung der Fahrzeuggeschwindigkeit vernachlässigt. Dabei kann ein Grenzwert definiert werden, wobei diejenigen Messwerte, bei denen der Grenzwert überschritten wird, als Ausreißer angesehen werden. Durch die Überprüfung der Konsistenz der Vektorbeträge und das Verwerfen inkonsistenter Werte kann die Effizienz des vorliegenden Messverfahrens weiter erhöht werden, wobei die Fehleranfälligkeit gleichzeitig reduziert wird.

Gemäß einer bevorzugten Ausführungsform der Erfindung kann vorgesehen sein, dass das erfindungsgemäße Verfahren den nachfolgenden Verfahrensschritt aufweist:
- Vergleich der miteinander korrespondierenden Merkmale in den durch den ersten Bildsensor zum ersten Zeitpunkt und zum zweiten Zeitpunkt aufgenommenen Bildaufnahmen und Vergleich der miteinander korrespondierenden Merkmale in den durch den zweiten Bildsensor zum ersten Zeitpunkt und zum zweiten Zeitpunkt aufgenommenen Bildaufnahmen hinsichtlich ihrer Epipolargeometrie, wobei diejenigen Merkmale, für die die Epipolarbedingung nicht erfüllt ist, verworfen werden.

Dadurch kann die Anzahl der Merkmale, die für die abschließende Geschwindigkeitsbestimmung verwendet werden, weiter reduziert werden, wobei nur die konsistenten Merkmale für die Geschwindigkeitsbestimmung berücksichtigt werden. Auf diese Weise kann die Effizient des erfindungsgemäßen Verfahrens weiter erhöht und zeitgleich die Präzision des Verfahrens verbessert werden, da deutlich weniger Messwerte für die abschließende Geschwindigkeitsbestimmung verwendet werden müssen und da inkonsistente Messwerte bei der Geschwindigkeitsbestimmung unberücksichtigt bleiben.

Ferner wird zur Lösung der eingangs beschriebenen Aufgabe ein System zur Bestimmung der Geschwindigkeit eines Fahrzeuges im Straßenverkehr vorgeschlagen, wobei das System Folgendes aufweist:
- einen ersten Bildsensor zur Erstellung einer ersten Bildaufnahme zu einem ersten Zeitpunkt und einer dritten Bildaufnahme zu einem zweiten Zeitpunkt;
- einen zweiten Bildsensor zur Erstellung einer zweiten Bildaufnahme zu dem ersten Zeitpunkt und einer vierten Bildaufnahme zu dem zweiten Zeitpunkt; und
- eine Auswerteeinheit, wobei die Auswärtseinheit dazu eingerichtet ist,
   - Merkmale in den einzelnen Bildaufnahme zu erkennen;
   - die Merkmale in den durch den ersten Bildsensor aufgenommenen Bildaufnahmen mit den in den durch den zweiten Bildsensor aufgenommenen Bildaufnahmen enthaltenen Merkmalen abzugleichen und diejenigen Merkmale, die lediglich in den durch den ersten Bildsensor aufgenommenen Bildaufnahmen oder in den durch den zweiten Bildsensor aufgenommenen Bildaufnahmen enthalten sind, zu verwerfen;
   - die miteinander korrespondierenden Merkmale in den durch den ersten Bildsensor aufgenommenen Bildaufnahmen mit den Merkmalen in den durch den zweiten Bildsensor aufgenommenen Bildaufnahmen hinsichtlich ihrer Epipolargeometrie zu vergleichen und diejenigen Merkmale, für die die Epipolarbedingung nicht erfüllt ist, zu verwerfen;
   - die Merkmale in den durch den ersten Bildsensor aufgenommenen Bildaufnahmen miteinander abzugleichen und diejenigen Merkmale, die nicht in beiden durch den ersten Bildsensor aufgenommenen Bildaufnahmen enthalten sind und diejenigen Merkmale, die nicht in beiden durch den zweiten Bildsensor aufgenommenen Bildaufnahmen enthalten sind, zu verwerfen;
   - die Merkmale, deren Position von dem ersten Zeitpunkt zu dem zweiten Zeitpunkt unverändert geblieben sind, zu bestimmen und diejenigen Merkmale zu entfernen, deren Position unverändert geblieben ist;
   - die räumliche Position der einzelnen Merkmale unter Verwendung eines Triangulationsverfahrens zu bestimmen;
   - einen Geschwindigkeitsvektor für jedes Merkmal zu bestimmen;
   - die Geschwindigkeit für jedes Merkmal aus dem für das entsprechende Merkmal bestimmte Geschwindigkeitsvektor und der Differenz aus dem ersten Zeitpunkt und dem zweiten Zeitpunkt zu bestimmen; und
   - eine mittlere Geschwindigkeit des Fahrzeuges durch Mittelung der bestimmten Geschwindigkeiten für jedes Merkmal zu bestimmen.

Der erste Bildsensor und der zweite Bildsensor können beispielsweise als CCD-Sensoren oder CMOS-Sensoren ausgebildet sein. Die Sensoren können zueinander geneigt und in einem gemeinsamen Sensorgehäuse angeordnet sein. Zudem können Aufnahmeoptiken vorgesehen sein, die zwischen dem jeweiligen Bildsensor und dem zu erfassenden Aufnahmeobjekt angeordnet sind. Die Auswerteeinheit kann beispielsweise als eine integrierte Recheneinheit mit einer CPU oder einer GPU, ein ASIC, ein Mikrocontroller oder ein FPGA ausgeführt sein. Zudem kann das erfindungsgemäße System eine Speichereinheit zum Speichern der Bildaufnahmen aufweisen. Alternativ kann es vorgesehen sein, dass ein externer Cloud-Speicher verwendet wird, auf dem die Bildaufnahmen gespeichert werden. In diesem Fall kann das Erfindungsmesssystem eine Kommunikationseinheit zum Austausch von Informationen mit dem externen Cloud-Speicher aufweisen.

Bei dem erfindungsgemäßen System kann die Auswerteeinheit zusätzlich dazu eingerichtet ist, die Konsistenz der Geschwindigkeitsvektoren unter Verwendung eines RANSAC-Verfahrens zu überprüfen, wobei diejenigen Geschwindigkeitsvektoren verworfen werden, die als inkonsistent angesehen werden.

Auch kann das erfindungsgemäße System einen Zeitgeber aufweisen, der dazu eingerichtet ist, zum Zeitpunkt einer Bildaufnahme eine Zeitsignatur zu erzeugen, welche der jeweiligen Bildaufnahme angehängt oder zugeordnet wird.

Ferner kann bei dem erfindungsgemäßen System vorgesehen sein, dass die Auswerteeinheit dazu eingerichtet ist, die Konsistenz der Richtung der einzelnen Geschwindigkeitsvektoren zu überprüfen, wobei jeweils der Winkel zwischen den einzelnen Geschwindigkeitsvektoren und einer vorgegebenen Bezugslinie ermittelt wird und aus den ermittelten Winkelwerten ein Winkelmittelwert bestimmt wird und diejenigen Geschwindigkeitsvektoren als inkonsistent angesehen werden, bei denen die Differenz zwischen dem ermittelten Winkelwert und dem Winkelmittelwert größer ist als ein vorgegebener Grenzwert, und wobei diejenigen Geschwindigkeitsvektoren verworfen werden, die als inkonsistent angesehen werden.

Darüber hinaus kann vorgesehen sein, dass die Auswerteeinheit dazu eingerichtet ist, die Konsistenz des Betrages der einzelnen Geschwindigkeitsvektoren unter Verwendung eines RANSAC-Verfahrens zu überprüfen, wobei diejenigen Geschwindigkeitsvektoren verworfen werden, die als inkonsistent angesehen werden.

Weiterhin kann die Auswerteeinheit zusätzlich dazu eingerichtet sein, die miteinander korrespondierenden Merkmale in den durch den ersten Bildsensor zum ersten Zeitpunkt und zum zweiten Zeitpunkt aufgenommenen Bildaufnahmen hinsichtlich ihrer Epipolargeometrie zu vergleichen und die miteinander korrespondierenden Merkmale in den durch den zweiten Bildsensor zum ersten Zeitpunkt und zum zweiten Zeitpunkt aufgenommenen Bildaufnahmen hinsichtlich ihrer Epipolargeometrie zu vergleichen, wobei diejenigen Merkmale, für die die Epipolarbedingung nicht erfüllt ist, verworfen werden.

Nachfolgend wird die vorliegende Erfindung anhand der Figuren näher erläutert. Dabei zeigen:
- Fig. 1: ein Ausführungsbeispiel für das erfindungsgemäße Verfahren,
- Fig. 2: ein Ausführungsbeispiel für das erfindungsgemäße System,
- Fig. 3: eine schematische Darstellung der Geschwindigkeitsmessung im Straßenverkehr,
- Fig. 4: eine erste Bildaufnahme und eine zweite Bildaufnahme, die zu einem ersten Zeitpunkt erzeugt wurden, und
- Fig. 5: eine dritte und eine vierte Bildaufnahme, die zu einem zweiten Zeitpunkt erzeugt wurden.

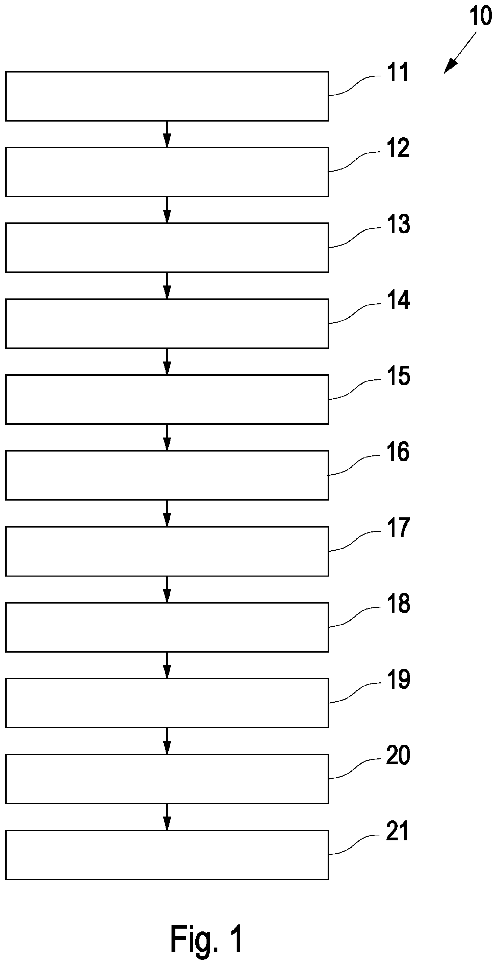

In der Fig. 1 ist ein Ausführungsbeispiel des erfindungsgemäßen Verfahrens 10 schematisch dargestellt. In dem gezeigten Ausführungsbeispiel umfasst das erfindungsgemäße Verfahren 10 insgesamt elf Verfahrensschritte 11-21. Im ersten Verfahrensschritt 11 wird eine erste Bildaufnahme und eine zweite Bildaufnahme unter Verwendung eines ersten Bildsensors und eines zweiten Bildsensors zu einem ersten Zeitpunkt erstellt. Im zweiten Verfahrensschritt 12 wird eine dritte Bildaufnahme und eine vierte Bildaufnahme zu einem zweiten Zeitpunkt erstellt. Anschließend werden in dem dritten Verfahrensschritt 13 Merkmale in den einzelnen Bildaufnahmen erkannt. Hierzu kann eines der vorstehend beschriebenen Verfahren zur Merkmalserkennung (beispielsweise ein Harris Corner Detector) eingesetzt werden. Die vorliegende Erfindung ist jedoch nicht auf den Einsatz eines einzelnen Merkmalserkennungsverfahrens begrenzt. Im vierten Verfahrensschritt 14 werden die Merkmale, die in den Bildaufnahmen des ersten Bildsensors erkannt wurden, mit den Merkmalen abgeglichen, die in den Bildaufnahmen des zweiten Bildsensors erkannt wurden. Insbesondere können dabei die Merkmale in der ersten Bildaufnahme mit den Merkmalen in der zweiten Bildaufnahme sowie die Merkmale in der dritten Bildaufnahme mit den Merkmalen in der vierten Bildaufnahme abgeglichen werden. Anders ausgedrückt können insbesondere die Merkmale, die in den Bildaufnahmen, welche durch den ersten Bildsensor und den zweiten Bildsensor zur selben Zeit aufgenommen wurden, abgeglichen werden. Dabei werden diejenigen Merkmale, die lediglich in der Bildaufnahme eines einzelnen Bildsensors enthalten sind, für die spätere Geschwindigkeitsbestimmung verworfen. Diese Merkmale werden als inkonsistente Merkmale angesehen, sodass das Verwerfen dieser Merkmale zur Erhöhung der Präzision bei der Berechnung der Fahrzeuggeschwindigkeit beiträgt. Im fünften Verfahrensschritt 15 werden die miteinander korrespondierenden Merkmale (d. h. diejenigen Merkmale, die sowohl durch den ersten Bildsensor als auch durch den zweiten Bildsensor erkannt wurden) hinsichtlich ihrer Epipolargeometrie verglichen, wobei diejenigen Merkmale, für die die Epipolarbedingung nicht erfüllt ist, verworfen werden. Diese Merkmale werden ebenfalls als inkonsistent angesehen, sodass das Verwerfen dieser Merkmale ebenfalls zur Erhöhung der Präzision bei der Berechnung der Fahrzeuggeschwindigkeit beiträgt. Im sechsten Verfahrensschritt 16 werden die Merkmale, die durch jeweils einen Bildsensor zu unterschiedlichen Zeiten aufgenommen wurden, miteinander abgeglichen. All diejenigen Merkmale, die nur in einer Bildaufnahme enthalten sind, werden als inkonsistent angesehen und verworfen. Im siebten Verfahrensschritt 17 werden diejenigen Merkmale bestimmt, deren Position zum ersten Zeitpunkt und zum zweiten Zeitpunkt unverändert geblieben sind. Diese Merkmale, die auch als konstante Merkmale angesehen werden, beziehen sich auf Objekte, die in der aufgenommenen Bildsequenz unbewegt sind (beispielsweise kann es sich um die Merkmale eines Gebäudes handeln), sodass diese Merkmale für die Geschwindigkeitsberechnung obsolet sind. Die konstanten Merkmale werden daher ebenfalls verworfen und bleiben bei der späteren Geschwindigkeitsberechnung unberücksichtigt. Durch das Verwerfen der inkonsistenten Merkmale wird die Genauigkeit der Berechnung und gleichzeitig die Effizienz des erfindungsgemäßen Verfahrens erhöht. Im achten Verfahrensschritt 18 wird die Position der Merkmale unter Verwendung eines Triangulationsverfahrens bestimmt. Anschließend wird im neunten Verfahrensschritt 19 ein Geschwindigkeitssektor für jedes erkannte (und nicht verworfene) Merkmal ermittelt. Im zehnten Verfahrensschritt 20 wird die Geschwindigkeit für jedes der erkannten Merkmale (sofern nicht zuvor verworfen) aus dem für das entsprechende Merkmal bestimmte Geschwindigkeitsvektor und der Differenz aus dem ersten Zeitpunkt und dem zweiten Zeitpunkt bestimmt. Schließlich wird im elften Verfahrensschritt 21 die mittlere Geschwindigkeit des Fahrzeugs durch Mitteilung der zuvor bestimmten Geschwindigkeiten für jedes relevante (d.h. konsistente) Merkmal bestimmt.

Auch wenn die vorstehend beschriebenen Verfahrensschritte aus illustrativen Gründen in einer vorgegebenen Reihenfolge beschrieben wurden, so ist es für den Fachmann ersichtlich, dass die Einhaltung der Reihenfolge nicht verbindlich ist und dass beispielsweise die Reihenfolge der einzelnen Schritte für das Verwerfen inkonsistenter Merkmale verändert werden kann, ohne von dem Prinzip der vorliegenden Erfindung abzuweichen.

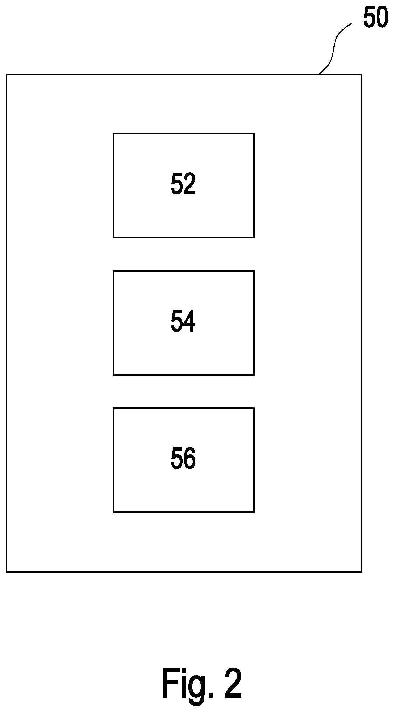

In der Fig. 2 ist ein Ausführungsbeispiel für das erfindungsgemäße System 50 dargestellt. Das System 50 weist einen ersten Bildsensor 52 und einen zweiten Bildsensor 54 auf. Die Bildsensoren 52, 54 können insbesondere als CCD-Bildsensor oder als CMOS-Bildsensor ausgebildet sein. Die Bildsensoren 52, 54 können jeweils dazu ausgebildet sein, eine Bildsequenz aus mindestens zwei Bildaufnahmen zu erstellen. Die Bildsensoren können bevorzugt dazu ausgebildet sein, eine Videosequenz aufzunehmen, die für die Berechnung einzelner Fahrzeuggeschwindigkeiten verwendet werden kann. Zudem weist das System 50 eine Auswerteeinheit 56 auf, wobei die Auswerteeinheit dazu eingerichtet ist, die im Zusammenhang mit der Fig. 1 beschriebenen Verfahrensschritte durchzuführen.

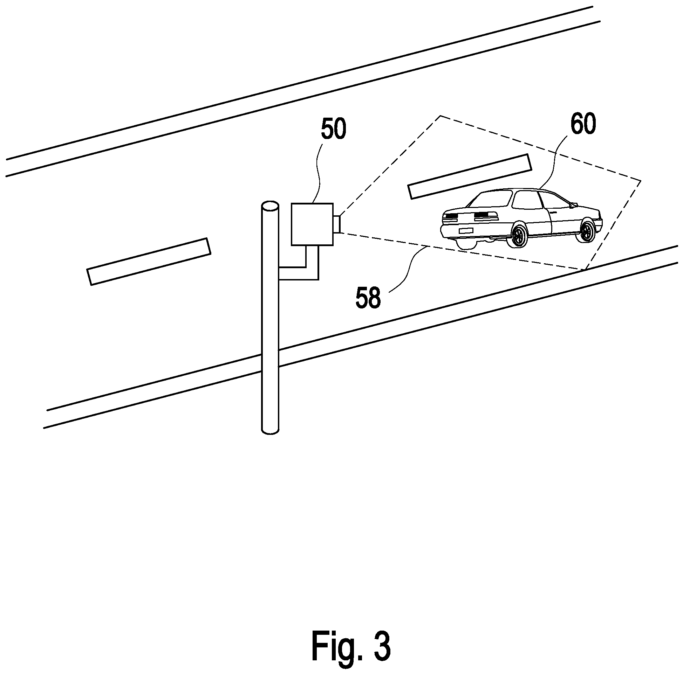

In der Fig. 3 ist das Prinzip der Geschwindigkeitsmessung unter Verwendung des erfindungsgemäßen Systems 50 schematisch dargestellt. Wie in dieser Figur gezeigt, kann das erfindungsgemäße System 50 beispielsweise an einem Straßenrand montiert sein. Das System 50 ist derart ausgerichtet, dass es einen Erfassungsbereich 58 überwachen kann. Sämtliche Fahrzeuge 60, die den Erfassungsbereich 58 passieren, können durch das System 50 überwacht werden, wobei insbesondere die Geschwindigkeit des Fahrzeugs 60 durch das vorstehend beschriebene Verfahren bestimmt werden kann. Sofern das erfindungsgemäße System 50 die Geschwindigkeit des Fahrzeugs 60 erkannt hat, kann es die ermittelte Geschwindigkeit mit der in dem jeweiligen Streckenabschnitt zulässigen Höchstgeschwindigkeit vergleichen. Ist die zulässige Höchstgeschwindigkeit durch das Fahrzeug 60 überschritten, so wird mindestens eine Bildaufnahme des Fahrzeugs 60 abgespeichert und an die zuständige Behörde weitergeleitet. Dabei kann beispielsweise eine einzelne Bildaufnahme des Fahrzeugs 60 an die zuständige Behörde zur Identifikation des Fahrzeughalters weitergeleitet werden, und zwar zusammen mit der ermittelten Geschwindigkeit. Alternativ können auch die aufgenommenen Bildsequenzen abgespeichert und weitergeleitet werden, sodass die Korrektheit der Geschwindigkeitsberechnung zu einem späteren Zeitpunkt verifiziert werden kann, sofern die Geschwindigkeitsüberschreitung von dem Fahrzeughalter infrage gestellt werden sollte.

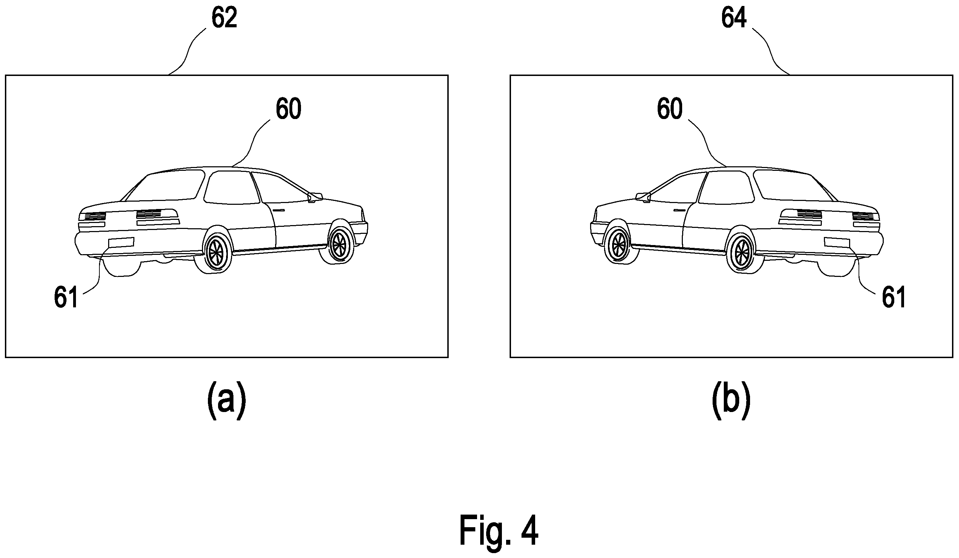

In der Fig. 4 sind eine erste Bildaufnahme 62 und eine zweite Bildaufnahme 64 dargestellt, die jeweils zu einem ersten Zeitpunkt t1 erzeugt wurden. Die erste Bildaufnahme 62 wurde durch einen ersten Bildsensor erstellt, während die zweite Bildaufnahme 64 durch einen zweiten Bildsensor erstellt wurde. Die beiden Bildsensoren nehmen die entsprechenden Bilder aus unterschiedlichen Perspektiven auf. In der ersten Bildaufnahme 62 ist ein Fahrzeug 60 zu erkennen. Innerhalb der Bildaufnahme 62 wurde ein Merkmal 61 erkannt. Bei diesem Merkmal 61 handelt es sich um einen Eckpunkt des Fahrzeugkennzeichens. Für die Merkmalserkennung kann eins der vorstehend beschriebenen Verfahren eingesetzt werden. Beispielsweise kann hierfür ein Harris Corner Detector zum Einsatz kommen. Das Merkmal 61 wurde ebenfalls in der zweiten Bildaufnahme 64 erkannt. Das Merkmal 61 kann beispielsweise durch einen Merkmalsvektor beschrieben werden. Durch Vergleich der Merkmalsvektoren der Merkmale, die in der ersten Bildaufnahme 62 und in der zweiten Bildaufnahme 64 erkannt wurden, kann geprüft werden, ob in den beiden Bildaufnahmen 62, 64 dasselbe Merkmal erkannt wurde. Ist dies der Fall, werden die beiden Merkmale 61 beibehalten. Sind die Merkmale 61 nur in einem der Bildaufnahmen 62, 64 enthalten, werden die Merkmale als inkonsistent klassifiziert und folglich verworfen.

Unter Verwendung trigonometrischer Beziehungen kann die Position des Merkmals 61 zum ersten Zeitpunkt bestimmt werden. Auch wenn in der Fig. 4 die Erkennung eines einzelnen Merkmals dargestellt ist, werden in der Praxis eine Vielzahl von Merkmalen in einer Bildaufnahme erkannt, wobei anschließend eine Konsistenzprüfung für die einzelnen Merkmale vorgenommen wird und all diejenigen Merkmale für die anschließende Geschwindigkeitsberechnung verworfen werden, die als inkonsistent angesehen werden. Beispielsweise können mehrere 100 oder mehrere 1.000 charakteristische Punkte in einer Bildaufnahme bzw. auf einem Fahrzeug erkannt werden, wobei ein Großteil dieser Punkte bzw. Merkmale für die anschließende Berechnung verworfen wird, um eine Auswahl an Merkmalen zu erhalten, die für die Geschwindigkeitsberechnung als relevant angesehen werden.

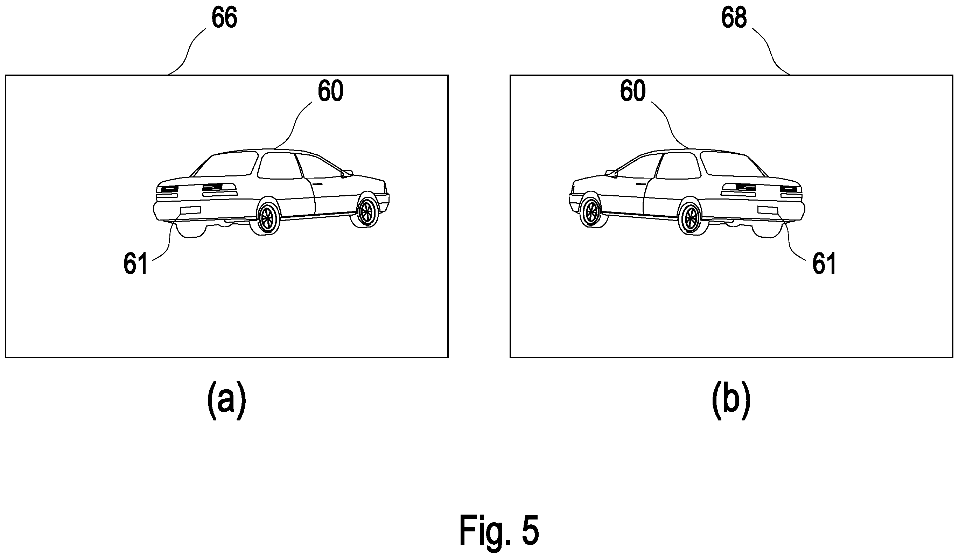

In der Fig. 5 sind eine dritte Bildaufnahme 66 und eine vierte Bildaufnahme 68 dargestellt, die zu einem zweiten Zeitpunkt t2 aufgenommen wurden. Die dritte Bildaufnahme 66 wurde durch den ersten Bildsensor aufgenommen, während die vierte Bildaufnahme 68 durch den zweiten Bildsensor aufgenommen wurde. In den Bildaufnahmen 66, 68 ist dasselbe Fahrzeug 60 abgebildet, das zuvor in der Fig. 4 zu erkennen war. Wie in der Fig. 5 dargestellt, hat das Fahrzeug 60 im Vergleich zu dem ersten Zeitpunkt t1 eine bestimmte Strecke zurückgelegt. Folglich hat sich die Position des Merkmals 61 von der Fig. 4 zur Fig. 5 verändert. Dadurch kann ein Geschwindigkeitsvektor für das Merkmal 61 ermittelt werden. Aus dem Geschwindigkeitssektor und der zeitlichen Differenz zwischen den in den Fign. 4 und 5 dargestellten Aufnahmen kann anschließend eine Geschwindigkeit für das Merkmal 61 bestimmt werden. Die vorstehend beschriebene Geschwindigkeitsermittlung kann für jedes einzelne der als konsistent bewerteten Merkmale durchgeführt werden, wobei anschließend die mittlere Geschwindigkeit des Fahrzeugs 60 durch Mittelung der zuvor für jedes einzelne Merkmal bestimmten Geschwindigkeiten berechnet werden kann. Dabei können die Geschwindigkeitsvektoren, die als Ausreißer angesehen werden, bei der Geschwindigkeitsbestimmung vernachlässigt werden.

### BEZUGSZEICHENLISTE

- 10: Verfahren
- 11: erster Verfahrensschritt
- 12: zweiter Verfahrensschritt
- 13: dritter Verfahrensschritt
- 14: vierter Verfahrensschritt
- 15: fünfter Verfahrensschritt
- 16: sechster Verfahrensschritt
- 17: siebter Verfahrensschritt
- 18: achter Verfahrensschritt
- 19: neunter Verfahrensschritt
- 20: zehnter Verfahrensschritt
- 21: elfter Verfahrensschritt
- 50: System
- 52: erster Bildsensor
- 54: zweiter Bildsensor
- 56: Auswerteeinheit
- 58: Erfassungsbereich
- 60: Fahrzeug
- 61: Merkmal
- 62: erste Bildaufnahme
- 64: zweite Bildaufnahme
- 66: dritte Bildaufnahme
- 68: vierte Bildaufnahme

## Patentansprüche

1. Verfahren (10) zur kamerabasierten Bestimmung der Geschwindigkeit eines Fahrzeuges (60) im Straßenverkehr, wobei das Verfahren (10) die nachfolgenden Verfahrensschritte aufweist:
- Erstellung (11) einer ersten Bildaufnahme (62) zu einem ersten Zeitpunkt unter Verwendung eines ersten Bildsensors (52) und Erstellung einer zweiten Bildaufnahme (64) zu dem ersten Zeitpunkt unter Verwendung eines zweiten Bildsensors (54);
- Erstellung (12) einer dritten Bildaufnahme (66) zu einem zweiten Zeitpunkt unter Verwendung des ersten Bildsensors (52) und Erstellung einer vierten Bildaufnahme (68) zu dem zweiten Zeitpunkt unter Verwendung des zweiten Bildsensors (54);
- Erkennung (13) von Merkmalen (61) in den einzelnen Bildaufnahmen;
- Abgleich (14) der Merkmale (61) in den durch den ersten Bildsensor (52) aufgenommenen Bildaufnahmen (62, 66) mit den in den durch den zweiten Bildsensor (54) zum jeweils gleichen Zeitpunkt aufgenommen Bildaufnahmen (64, 68) enthaltenen Merkmale (61), wobei diejenigen Merkmale (61), die lediglich in den durch den ersten Bildsensor (52) aufgenommen Bildaufnahmen (62, 66) oder in den durch den zweiten Bildsensor (54) aufgenommenen Bildaufnahmen (64, 68) enthalten sind, verworfen werden;
- Vergleich (15) der miteinander korrespondierenden Merkmale (61) in den durch den ersten Bildsensor (52) aufgenommenen Bildaufnahmen (62, 66) mit den Merkmalen (61) in den durch den zweiten Bildsensor (54) aufgenommenen Bildaufnahmen (64, 68) hinsichtlich ihrer Epipolargeometrie, wobei diejenigen Merkmale (61), für die die Epipolarbedingung nicht erfüllt ist, verworfen werden;
- Abgleich (16) der Merkmale (61) in den durch den ersten Bildsensor (52) aufgenommenen Bildaufnahmen (62, 66), wobei diejenigen Merkmale (61), die nicht in beiden durch den ersten Bildsensor (52) aufgenommenen Bildaufnahmen (64, 68) enthalten sind und diejenigen Merkmale (61), die nicht in beiden durch den zweiten Bildsensor (54) aufgenommenen Bildaufnahmen (64, 68) enthalten sind, verworfen werden;
- Bestimmung (17) von Merkmalen (61), deren Position von dem ersten Zeitpunkt zu dem zweiten Zeitpunkt unverändert geblieben sind und Entfernung derjenigen Merkmale (61), deren Position unverändert geblieben ist;
- Bestimmung (18) der räumlichen Position der Merkmale (61) unter Verwendung eines Triangulationsverfahrens;
- Bestimmung (19) eines Geschwindigkeitsvektors für jedes Merkmal (61);
- Bestimmung (20) der Geschwindigkeit für jedes Merkmal (61) aus dem für das entsprechende Merkmal (61) bestimmten Geschwindigkeitsvektor und der Differenz aus dem ersten Zeitpunkt und dem zweiten Zeitpunkt; und
- Bestimmung (21) einer mittleren Geschwindigkeit des Fahrzeuges (60) durch Mittelung der bestimmten Geschwindigkeiten für jedes Merkmal (61).

2. Verfahren (10) nach Anspruch 1, ferner **gekennzeichnet durch** den nachfolgenden Verfahrensschritt:
- Überprüfung der Konsistenz der Geschwindigkeitsvektoren unter Verwendung eines RANSAC-Verfahrens, wobei diejenigen Geschwindigkeitsvektoren verworfen werden, die als inkonsistent bewertet wurden.

3. Verfahren (10) nach Anspruch 1 oder 2, **dadurch gekennzeichnet, dass** bei der Erstellung jeder Bildaufnahme (62, 64, 66, 68) eine Zeitsignatur generiert wird, welche der Bildaufnahme (62, 64, 66, 68) angehängt oder zugeordnet wird.

4. Verfahren (10) nach einem der Ansprüche 1 bis 3, ferner **gekennzeichnet durch** den nachfolgenden Verfahrensschritt:
- Überprüfung der Konsistenz der Richtung der einzelnen Geschwindigkeitsvektoren, wobei jeweils der Winkel zwischen den einzelnen Geschwindigkeitsvektoren und einer vorgegebenen Bezugslinie ermittelt wird und aus den ermittelten Winkelwerten ein Winkelmittelwert bestimmt wird und diejenigen Geschwindigkeitsvektoren als inkonsistent angesehen werden, bei denen die Differenz zwischen dem ermittelten Winkel und dem Winkelmittelwert größer ist als ein vorgegebener Grenzwert, und wobei diejenigen Geschwindigkeitsvektoren verworfen werden, die als inkonsistent angesehen werden.

5. Verfahren (10) nach einem der Ansprüche 1 bis 4, ferner **gekennzeichnet durch** den nachfolgenden Verfahrensschritt:
- Überprüfung der Konsistenz des Betrages der einzelnen Geschwindigkeitsvektoren unter Verwendung eines RANSAC-Verfahrens, wobei diejenigen Geschwindigkeitsvektoren verworfen werden, die als inkonsistent angesehen werden.

6. Verfahren (10) nach einem der Ansprüche 1 bis 5, ferner **gekennzeichnet durch** den nachfolgenden Verfahrensschritt:
- Vergleich der miteinander korrespondierenden Merkmale (61) in den durch den ersten Bildsensor (52) zum ersten Zeitpunkt und zum zweiten Zeitpunkt aufgenommenen Bildaufnahmen (62, 66) und Vergleich der miteinander korrespondierenden Merkmale (61) in den durch den zweiten Bildsensor (54) zum ersten Zeitpunkt und zum zweiten Zeitpunkt aufgenommenen Bildaufnahmen (64, 68) hinsichtlich ihrer Epipolargeometrie, wobei diejenigen Merkmale (61), für die die Epipolarbedingung nicht erfüllt ist, verworfen werden.

7. System (50) zur Bestimmung der Geschwindigkeit eines Fahrzeuges (60) im Straßenverkehr, umfassend
- einen ersten Bildsensor (52) zur Erstellung einer ersten Bildaufnahme (62) zu einem ersten Zeitpunkt und einer dritten Bildaufnahme (66) zu einem zweiten Zeitpunkt;
- einen zweiten Bildsensor (54) zur Erstellung einer zweiten Bildaufnahme (64) zu dem ersten Zeitpunkt und einer vierten Bildaufnahme (68) zu dem zweiten Zeitpunkt; und
- eine Auswerteeinheit (56), wobei die Auswärtseinheit (56) dazu eingerichtet ist,
- Merkmale (61) in den einzelnen Bildaufnahme (62, 64, 66, 68) zu erkennen;
- die Merkmale (61) in den durch den ersten Bildsensor (52) aufgenommenen Bildaufnahmen (62, 66) mit den in den durch den zweiten Bildsensor (54) aufgenommenen Bildaufnahmen (64, 68) enthaltenen Merkmalen (61) abzugleichen und diejenigen Merkmale (61), die lediglich in den durch den ersten Bildsensor (52) aufgenommenen Bildaufnahmen (62, 66) oder in den durch den zweiten Bildsensor (54) aufgenommenen Bildaufnahmen (64, 68) enthalten sind, zu verwerfen;
- die miteinander korrespondierenden Merkmale (61) in den durch den ersten Bildsensor (52) aufgenommenen Bildaufnahmen (62, 66) mit den Merkmalen (61) in den durch den zweiten Bildsensor (54) aufgenommenen Bildaufnahmen (64, 68) hinsichtlich ihrer Epipolargeometrie zu vergleichen und diejenigen Merkmale (61), für die die Epipolarbedingung nicht erfüllt ist, zu verwerfen;
- die Merkmale (61) in den durch den ersten Bildsensor (52) aufgenommenen Bildaufnahmen (62, 66) miteinander abzugleichen und diejenigen Merkmale (61), die nicht in beiden durch den ersten Bildsensor (52) aufgenommenen Bildaufnahmen (62, 66) enthalten sind und diejenigen Merkmale (61), die nicht in beiden durch den zweiten Bildsensor (54) aufgenommenen Bildaufnahmen (64, 68) enthalten sind, zu verwerfen;
- die Merkmale (61), deren Position von dem ersten Zeitpunkt zu dem zweiten Zeitpunkt unverändert geblieben sind, zu bestimmen und diejenigen Merkmale (61) zu entfernen, deren Position unverändert geblieben ist;
- die räumliche Position der einzelnen Merkmale (61) unter Verwendung eines Triangulationsverfahrens zu bestimmen;
- einen Geschwindigkeitsvektor für jedes Merkmal (61) zu bestimmen;
- die Geschwindigkeit für jedes Merkmal (61) aus dem für das entsprechende Merkmal (61) bestimmte Geschwindigkeitsvektor und der Differenz aus dem ersten Zeitpunkt und dem zweiten Zeitpunkt zu bestimmen; und
- eine mittlere Geschwindigkeit des Fahrzeuges (60) durch Mittelung der bestimmten Geschwindigkeiten für jedes Merkmal (61) zu bestimmen.

8. System (50) nach Anspruch 7, **dadurch gekennzeichnet, dass** die Auswerteeinheit (56) zusätzlich dazu eingerichtet ist, die Konsistenz der Geschwindigkeitsvektoren unter Verwendung eines RANSAC-Verfahrens zu überprüfen, wobei diejenigen Geschwindigkeitsvektoren verworfen werden, die als inkonsistent bewertet wurden.

9. System (50) nach Anspruch 7 oder 8, **gekennzeichnet durch** einen Zeitgeber, der dazu eingerichtet ist, zum Zeitpunkt einer Bildaufnahme (62, 64, 66, 68) eine Zeitsignatur zu erzeugen, welche der jeweiligen Bildaufnahme (62, 64, 66, 68) angehängt oder zugeordnet wird.

10. System (50) nach einem der Ansprüche 7 bis 9, **dadurch gekennzeichnet, dass** die Auswerteeinheit(56) dazu eingerichtet ist, die Konsistenz der Richtung der einzelnen Geschwindigkeitsvektoren zu überprüfen, wobei jeweils der Winkel zwischen den einzelnen Geschwindigkeitsvektoren und einer vorgegebenen Bezugslinie ermittelt wird und aus den ermittelten Winkelwerten ein Winkelmittelwert bestimmt wird und diejenigen Geschwindigkeitsvektoren als inkonsistent angesehen werden, bei denen die Differenz zwischen dem ermittelten Winkelwert und dem Winkelmittelwert größer ist als ein vorgegebener Grenzwert, und wobei diejenigen Geschwindigkeitsvektoren verworfen werden, die als inkonsistent angesehen werden.

11. System (50) nach einem der Ansprüche 7 bis 10, **dadurch gekennzeichnet, dass** die Auswerteeinheit (56) ferner dazu eingerichtet ist, die Konsistenz des Betrages der einzelnen Geschwindigkeitsvektoren unter Verwendung eines RANSAC-Verfahrens zu überprüfen, wobei diejenigen Geschwindigkeitsvektoren verworfen werden, die als inkonsistent angesehen werden.

12. System (50) nach einem der Ansprüche 7 bis 11, **dadurch gekennzeichnet, dass** die Auswerteeinheit (56) zusätzlich dazu eingerichtet ist, die miteinander korrespondierenden Merkmale (61) in den durch den ersten Bildsensor (52) zum ersten Zeitpunkt und zum zweiten Zeitpunkt aufgenommenen Bildaufnahmen (62, 66) zu vergleichen und die miteinander korrespondierenden Merkmale (61) in den durch den zweiten Bildsensor zum ersten Zeitpunkt und zum zweiten Zeitpunkt aufgenommenen Bildaufnahmen (64, 68) hinsichtlich ihrer Epipolargeometrie zu vergleichen, wobei diejenigen Merkmale (61), für die die Epipolarbedingung nicht erfüllt ist, verworfen werden.
